# EUROPEAN PATENT APPLICATION

(11) **EP 2 730 964 A2**
(43) Date of publication of application: **14.05.2014**
(21) Application number: 13177657.7
(22) Date of filing: 23.07.2013
(51) Int. Cl.: G02B 27/01

(54) **Head-mounted display apparatus and control method thereof**

(30) Priority: 08.11.2012 KR 20120125911
(71) Applicant: Samsung Electronics Co., Ltd, Gyeonggi-do 443-742 (KR)
(72) Inventor: NA, Moon-sung, Gyeonggi-do (KR); HA, Tae-hyeun, Gyeonggi-do (KR); KANG, Keun-seok, Gyeonggi-do (KR)
(74) Representative: Hewett, Jonathan Michael Richard

(57) **Abstract**

A head-mounted display apparatus and method of the control are provided. The apparatus includes a display unit, a signal processing unit processing an image signal received from an outside to display a first image on the display unit, a shutter glass performing a shutter operation to allow selective transmission of external light, a communication unit communicating with an external display apparatus, and a controller controlling the head-mounted display apparatus to operate in a selective one of a first mode, in which the head-mounted display apparatus operates corresponding to a second image displayed on the external display apparatus, and a second mode, in which the head-mounted display apparatus displays the image signal processed by the signal processing unit on the display unit as the first image, based on a preset event.

## Description

The present invention relates to a head-mounted display apparatus worn on a user's head and a control method thereof, more particularly to a head-mounted display apparatus having a configuration of selectively controlling transmission of external light with respect to both eyes of a user based on various operation modes of the apparatus, and a control method thereof.

A display apparatus is a device that includes a display panel to display an image. Images may be displayed on the panel based on various formats of received image signals/image data. The display panel is generally configured as a TV or a monitor. The display panel may be configured as a variety of display types, such as a liquid crystal display (LCD) panel and a plasma display panel (PDP), based on characteristics thereof, which may be applied to diverse display apparatuses. A display apparatus having a diagonal screen measurement of 40 inches or more of a large-screen panel is available to ordinary users.

Various types of display apparatuses are proposed with advances in technology, for example, a head-mounted display apparatus. The head-mounted display apparatus may be configured as a pair of glasses worn on a user's head and has, for example, a structure in which a pair of glasses covering both left and right eyes of the user are supported by a frame mounted on the user's head. A processing module for processing an image signal and a battery may be installed in the frame.

When displaying an image, the head-mounted display apparatus may form an image on the glasses covering both eyes of the user, so that the user perceives the image. Despite a display of an image being of comparatively small size, the head-mounted display apparatus forms the display of the image close to the eyes of the user, thus enabling the user to perceive the display of the image as a larger-screen image.

Aspects and/or advantages of the present invention will be set forth in part in the description which follows and, in part, will be apparent from the description, or may be learned by practice of the invention.

The foregoing and/or other aspects may be achieved by providing a head-mounted display apparatus including a display unit, a signal processing unit processing an image signal received from an outside to display a first image on the display unit, a shutter glass performing a shutter operation to allow selective transmission of external light, a communication unit communicating with an external display apparatus, and a controller controlling the head-mounted display apparatus to operate in a selective one of a first mode, in which the head-mounted display apparatus operates corresponding to a second image displayed on the external display apparatus, and a second mode, in which the head-mounted display apparatus displays the image signal processed by the signal processing unit on the display unit as the first image, based on a preset event.

The controller may control the shutter operation of the shutter glass to correspond to a display cycle of the second image in the first mode and controls the shutter glass to maintain transmission of external light at a preset first transmittance in the second mode.

The controller may control the shutter glass to transmit the external light at a second transmittance different from the first transmittance.

The head-mounted display apparatus may include a user input unit configured to command adjustment of transmittance of the shutter glass by the controller based on a user input.

The user input unit may include an external device communicating with the communication unit via a wire or wirelessly.

The user input unit may include a touch sensor installed in the head-mounted display apparatus.

The head-mounted display apparatus may include a illumination sensor, the controller may adjust transmittance of the shutter glass based on a detection result by the illumination sensor.

The controller may control the first image on the display unit to stay still or controls not to display the first image on the display unit while transmittance of the shutter glass is adjusted.

The head-mounted display apparatus may include a user input unit, the preset event may be generated by a user input through the user input unit.

The preset event may be generated by performing or cancelling pairing with the external display apparatus through the communication unit.

The controller may control the shutter operation in accordance with when the second image displayed on the external display apparatus is a three-dimensional (3D) image or a multi-view image in the first mode.

The communication unit may receive a synchronization signal corresponding a display cycle of the second image from the external display apparatus in the first mode, and the controller may control the shutter operation based on the synchronization signal.

According to an aspect of the present invention, a control method of a head-mounted display apparatus is provided including a display unit and a shutter glass performing a shutter operation to allow selective transmission of external light, the control method including receiving a control signal based on a preset event, and controlling the head-mounted display apparatus to operate in a selective one of a first mode, in which the head-mounted display apparatus operates corresponding to an external image displayed on the external display apparatus, and a second mode, in which the head-mounted display apparatus displays an image on the display unit, based on the control signal.

The controlling the head-mounted display apparatus to operate in the selective one of the first mode and the second mode may include controlling the shutter operation of the shutter glass to correspond to a display cycle of the external image in the first mode and controlling the shutter glass to maintain transmission of external light at a preset first transmittance in the second mode.

The controlling the head-mounted display apparatus to operate in the selective one of the first mode and the second mode may include controlling the shutter glass to transmit the external light at a second transmittance different from the first transmittance based on a user input in the second mode.

The controlling the head-mounted display apparatus to operate in the selective one of the first mode and the second mode may include automatically controlling the shutter glass to transmit the external light at a second transmittance different from the first transmittance based on a detection result by an illumination sensor installed in the head-mounted display apparatus in the second mode.

The control method may include controlling the image on the display unit to stay still or controlling not to display the image on the display unit while transmittance of the shutter glass is adjusted.

The preset event may be generated by a user input.

The preset event may be generated by performing or cancelling pairing the head-mounted display apparatus with the external display apparatus.

The controlling the head-mounted display apparatus to operate in the selective one of the first mode and the second mode may include controlling the shutter operation in accordance with when the external image displayed on the external display apparatus is a three-dimensional (3D) image or a multi-view image in the first mode.

The controlling the shutter operation in the first mode may include receiving a synchronization signal corresponding a display cycle of the external image from the external display apparatus in the first mode, and controlling the shutter operation based on the synchronization signal.

According to an aspect of the present invention, a head-mounted display apparatus is provided including a display unit, a signal processing unit processing an image signal received from an outside to display an image on the display unit, a shutter glass performing a shutter operation to allow selective transmission of external light, and a controller controlling the shutter glass to transmit the external light at a first transmittance while the image is displayed on the display unit, and controlling the shutter glass to transmit the external light at a second transmittance different from the first transmittance when a preset event occurs while the shutter glass transmits the external light at the first transmittance.

The above and/or other aspects will become apparent and more readily appreciated from the following description of the exemplary embodiments, taken in conjunction with the accompanying drawings, in which:
FIG. 1 illustrates a display apparatus according to an exemplary embodiment;
FIG. 2 illustrates an exemplary display apparatus;
FIG. 3 illustrates an exemplary forming an image displayed on a display unit of a display apparatus in the left eye of a user;
FIG. 4 illustrates an exemplary shutter detached from a display apparatus;
FIG. 5 illustrates a display apparatus operating in synchronization with an external display apparatus; and
FIG. 6 is a flowchart illustrating an exemplary a control method of a display apparatus.

Exemplary embodiments are described in detail with reference to accompanying drawings so as to be easily understandable to a person having ordinary skill in the art. The present invention may be embodied in various forms without being limited to the exemplary embodiments set forth herein. Descriptions of well-known parts are omitted for clarity and conciseness, and like reference numerals refer to like elements throughout.

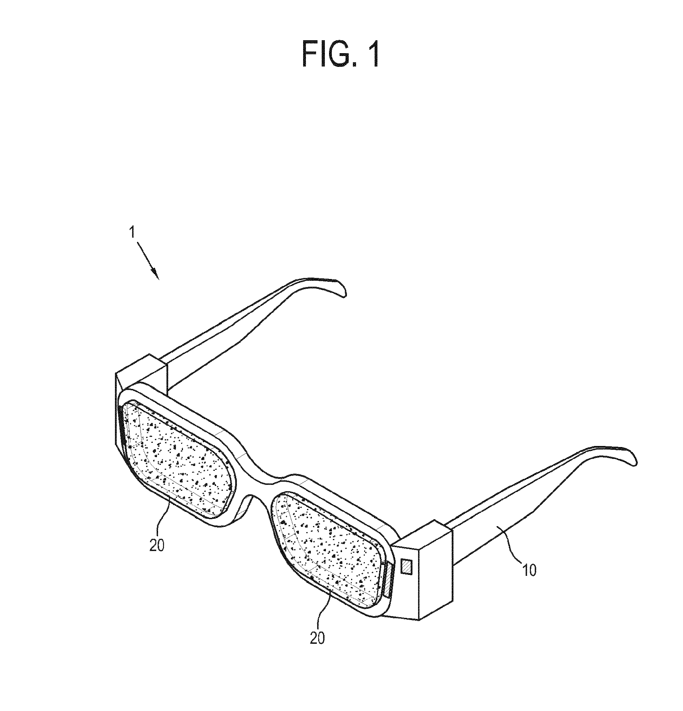

FIG. 1 illustrates a display apparatus 1 according to an exemplary embodiment.

As illustrated in FIG. 1, the display apparatus 1 according to an exemplary embodiment is a head-mounted display apparatus 1 for mounting on a user's head. The display apparatus 1 may have a similar shape to a pair of general glasses and includes a frame 10 configured to be put on the head or ears of a user and a glass unit 20 supported by the frame 10 and covering views of both left and right eyes of the user.

The frame 10 and the glass unit 20 may be formed in various shapes with various materials, without being particularly limited. The frame 10 and the glass unit 20 form an interior space to accommodate different elements of the display apparatus 1, which will be described. The glass units 20 may be formed of a transparent material to enable light transmission.

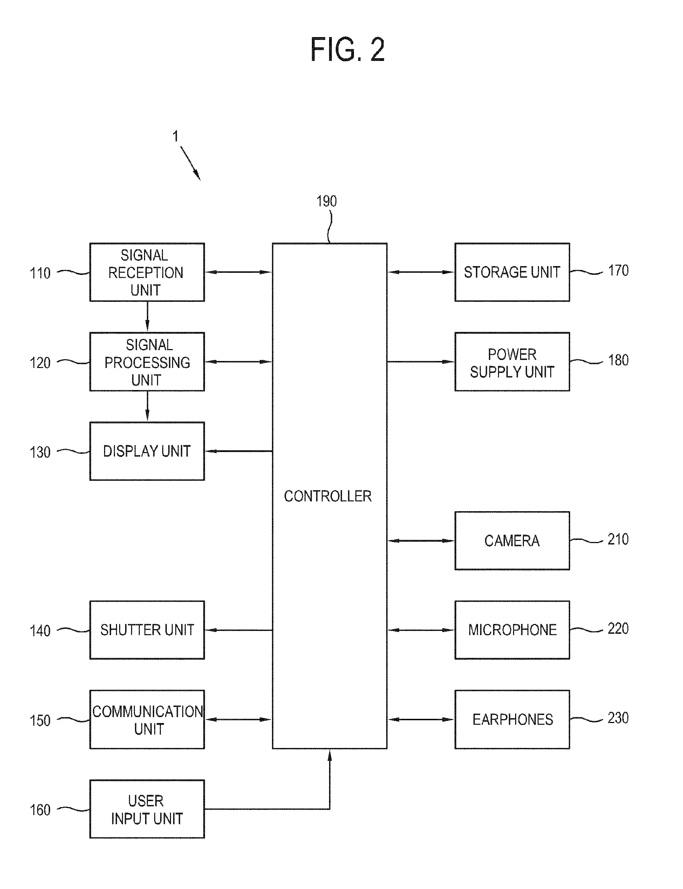

An exemplary configuration of the display apparatus 1 is described in detail with reference to FIG. 2.

FIG. 2 illustrates an exemplary display apparatus 1. Components of the display apparatus 1 illustrated in FIG. 2 may be accommodated in the frame 10 or the glass unit 20 of FIG. 1. Accommodation forms or methods of use of these components may change based on shapes of the frame 10 and the glass units 20 and do not limit the scope of the present invention.

The elements of the display apparatus 1 illustrated in FIG. 2 are provided for illustrative purposes only. Thus, it should be understood that an exemplary embodiment of the present invention is not limited to the elements illustrated in FIG. 1 and/or FIG. 2.

As illustrated in FIG. 2, the display apparatus 1 includes a signal reception unit 110 receiving an external image signal from the outside, a signal processing unit 120 processing an image signal received by the signal reception unit 110 according to a preset image processing process, a display unit 130 displaying an image based on the image signal processed by the signal processing unit 120, a shutter unit 140 conducting a shutter operation to allow selective transmission of external light for both eyes of a user, a communication unit 150 communicating with various external devices (not shown), a user input unit 160 generating a preset control command by manipulation of the user, a storage unit 170 storing data, a power supply unit 180 supplying operating power to each component of the display apparatus 1, and a controller 190 controlling general operations of the display apparatus 1.

The display apparatus 1 may include a camera 210 for taking/picking up a video/still image of an external environment, a microphone 220 detecting a sound of the external environment, and earphones 230 outputting the sound.

The signal reception unit 110 receives an image signal/image data transmitted from the outside via a cable/wirelessly and transmits the signal/data to the signal processing unit 120 or the controller 190. For example, the signal reception unit 110 may receive a radio frequency (RF) signal transmitted from a broadcasting station (not shown) wirelessly or receive image signals in accordance with composite video, component video, super video, SCART, high definition multimedia interface (HDMI), DisplayPort, unified display interface (UDI), or wireless HD standards via a cable.

Although the signal reception unit 110 is illustrated as a separate component from the communication unit 150 in an exemplary embodiment, the signal reception unit 110 and the communication unit 150 may be integrated as a communication interface depending on a design.

The signal processing unit 120 performs various image processing processes on an image signal received by the signal reception unit 110. The signal processing unit 120 outputs a processed image signal to the display unit 130, so that an image based on the image signal is displayed on the display unit 130.

The signal processing unit 120 may perform any type of image processing process, without being limited to, for example, decoding corresponding to an image format of image data, de-interlacing to convert an interlaced image signal into a progressive form, scaling to adjust image data to a preset resolution, noise reduction to improve image quality, detail enhancement, and frame refresh rate conversion.

The signal processing unit 120 may be provided as an integrated multi-functional component, such as a system on chip (SOC), or as an image processing board (not shown) formed by mounting components which independently conduct individual processes on a printed circuit board and be embedded in the display apparatus 1.

The display unit 130 displays an image based on an image signal processed by the signal processing unit 120 to be formed close to both eyes of the user. A configuration of the display unit 130 to display an image is described in detail.

The shutter unit 140 conducts a shutter operation to selectively allow/block transmission of external light for both eyes of the user. The shutter unit 140 may be configured as liquid crystal shutter glass having light transmittance adjusted by the controller 190 and is installed on an outside of the glass unit 20 to cover both eyes of the user.

The shutter operation conducted by the shutter unit 140 may be selective or simultaneous for the respective eyes of the user. For example, the shutter unit 140 may conduct a shutter operation such that light is blocked for the left eye of the user and light is transmitted for the right eye of the user. Alternatively, the shutter unit 140 may conduct a shutter operation such that light is blocked for the right eye of the user and light is transmitted for the left eye of the user. Alternatively, the shutter unit 140 may conduct a shutter operation such that light is blocked for both the right and left eyes of the user or transmitted for both right and left eyes of the user through adjusting transmittance of the external light.

The communication unit 150 may perform bidirectional communications with various types of external devices (not shown) via a cable/wirelessly. The communication unit 150 may be a communication interface along with the signal reception unit 110 depending on a design. In an exemplary embodiment, the communication unit 150 may perform wireless communications according to a bidirectional RF/wireless communication standard, such as RF and Bluetooth.

The user input unit 160 generates a preset control command and transmits the command to the controller 190 by manipulation of the user. For example, the user input unit 160 may be configured as an input key pad (not shown) installed on the frame 10 or a touch screen (not shown) or touch sensor (not shown) on the glass units 20.

The user input unit 160 may be configured as an external device (not shown) separated from the display apparatus 1, such as a remote controller or a mobile phone. In this case, the user input unit 160 communicates with the communication unit 150 to transmit the control command to the controller 190.

The storage unit 170 may store varied amounts of data according to control of the controller 190. The storage unit 170 may be configured as a nonvolatile memory, such as a flash memory and a hard disk drive. The storage unit 170 may be accessed by the controller 190, and the data stored in the storage unit 170 may be read/recorded/revised/deleted/updated by the controller 190.

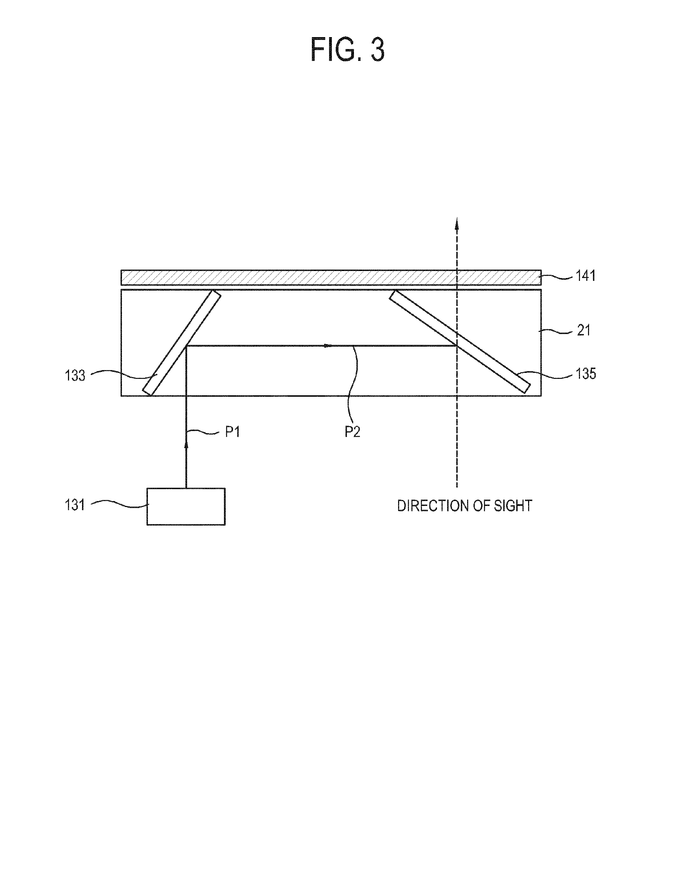

The power supply unit 180 may supply direct-current (DC) power for operation of components of the display apparatus 1. The power supply unit 180 may be configured as a primary battery or a secondary battery, e.g., a secondary battery chargeable with an external power source for utilization. Power supply of the power supply unit 180 may be controlled by the controller 190, for example, whether to output power to a particular element, an output voltage level, and output duty adjustment are controlled. An exemplary structure of displaying an image on a display unit 130 is described with reference to FIG. 3.

FIG. 3 illustrates an exemplary structure of forming an image displayed by the display unit 130 in the left eye of the user. Since an exemplary structure with respect to the left eye of the user and an exemplary structure with respect to the right eye of the user may be symmetrical on the display unit 130, an exemplary embodiment may be applied to the structure of forming an image in the right eye of the user, and thus descriptions thereof are omitted herein.

As illustrated in FIG. 3, the display unit 130 includes a display element 131 on which an image signal processed by the signal processing unit 120 may be displayed as an image, a total reflection mirror 133 reflecting an image displayed on the display element 131, and a translucent mirror 135 on which an image reflected by the total reflection mirror 133 is formed.

A left-eye shutter 141 covers an outside of a left-eye glass 21, thereby selectively controlling transmission of external light to the left eye of the user.

The display element 131 may be installed in the frame 10. The display element 131 may be configured as an LCD panel and displays an image by the signal processing unit 120.

The total reflection mirror 133 and the translucent mirror 135 may be installed in the left-eye glass 21 corresponding to the left eye of the user. The total reflection mirror 133 may be disposed in a position of the left-eye glass 21 out of sight of the user and has total reflection characteristics to reflect an image displayed on the display element 131 The translucent mirror 135 may be disposed in a direction of sight of the user and has characteristics of transmitting part of entering light and forming the remaining entering light on the surface as an image.

When the left-eye shutter 141 allows light to be transmitted and an image is not displayed on the display element 131, external light may pass through the left-eye shutter 141, the left-eye glass 21 and the translucent mirror 135 and then arrive in the left eye of the user. Thus, in this case, the user wearing the display apparatus 1 may perceive the external environment using the left eye.

When an image is displayed on the display element 131, the image displayed on the display element 131 enters the total reflection mirror 133 (P1). In this process P1, a lens (not shown) to adjust optical properties or an image transmission duct (not shown) to transmit an image, such as fiber, may be installed in the frame 10.

The image reflected by the total reflection mirror 133 may be formed on the translucent mirror 135 (P2). The image formed on the translucent mirror 135 may be perceived by the left eye of the user. When the left-eye shutter 141 is in a state of allowing light transmission, the user may perceive the external environment through the translucent mirror 135, with the image formed on the translucent mirror 135.

When it is not easy to perceive an image on the translucent mirror 135 due to external light, the user may operate the left-eye shutter 141 to block light, thereby preventing interference by the external light.

Thus, the display apparatus 1 may display an image based on an image signal received from outside the apparatus or autonomously stored.

An exemplary structure of the display unit 130 is not limited to the foregoing example but may be modified variously.

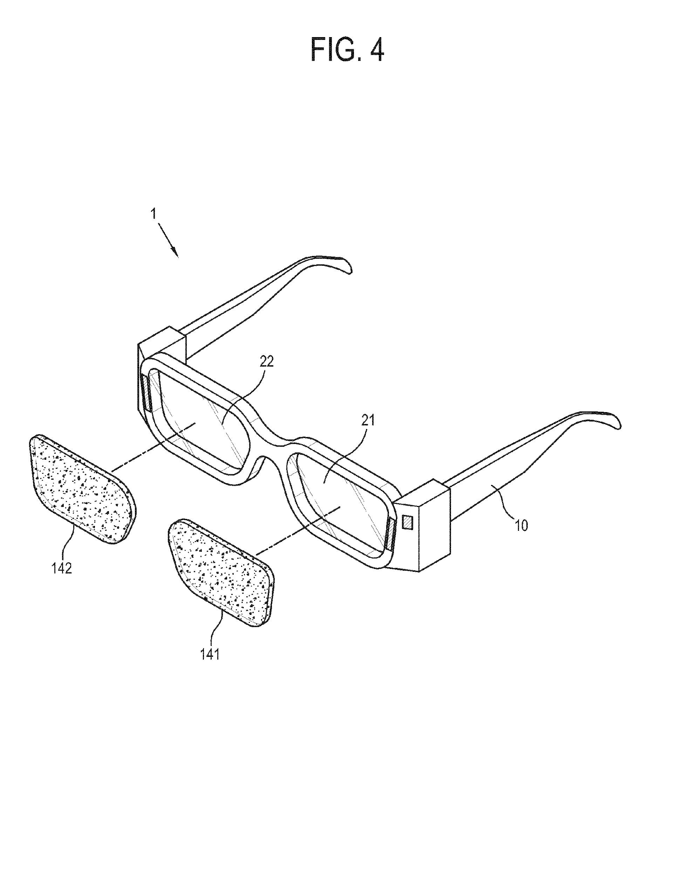

As illustrated in FIG. 4, for example, the left-eye shutter 141 and the right-eye shutter 142 respectively corresponding to the left and right eyes of the user may be configured to be detachable from the frame 10. The left-eye shutter 141 and the right-eye shutter 142 may be combined with the frame 10 to block external light from the left-eye glass 21 and the right-eye glass 22.

A structure of the left-eye shutter 141 and the right-eye shutter 142 detachable from the frame 10 may be modified variously. When the left-eye shutter 141 and the right eye-shutter 142 are mounted on the frame 10, the controller 190 may become electrically conductive by a terminal (not shown) installed in the frame 10 to the left-eye shutter 141 and the right-eye shutter 142 so that the controller 190 controls shutter operations of the left-eye shutter 141 and the right-eye shutter 142. The terminal may be configured to cancel a current flowing state of the left-eye shutter 141 and the right-eye shutter 142 with respect to the controller 190 when the left-eye shutter 141 and the right-eye shutter 142 is detached from the frame 10.

Although the embodiment illustrated in FIG. 3 illustrates an exemplary configuration of the left-eye glass 21 including the display element 131, the total reflection mirror 133 and the translucent mirror 135, the display unit 130 may be realized in various configurations, without being limited to the foregoing example. For instance, the left-eye glass 21 and the right-eye glass 22 may be configured as a transparent display, thereby allowing external light to be transmitted at a preset percentage while an image is formed on the left-eye glass 21 and the right-eye glass 22.

The display apparatus 1 according to an exemplary embodiment may not only autonomously display an image but may operate as a multi-view device and/or in a three-dimensional (3D) glasses mode that performs a shutter operation in synchronization with an external display apparatus 30. An exemplary mode in which the display apparatus 1 displays an image signal processed by the signal processing unit 120 as an image on the display unit 130 may be defined as an image display mode, and an exemplary mode in which the display apparatus 1 performs a shutter operation in synchronization with the external display apparatus 30 may be defined as a synchronous mode.

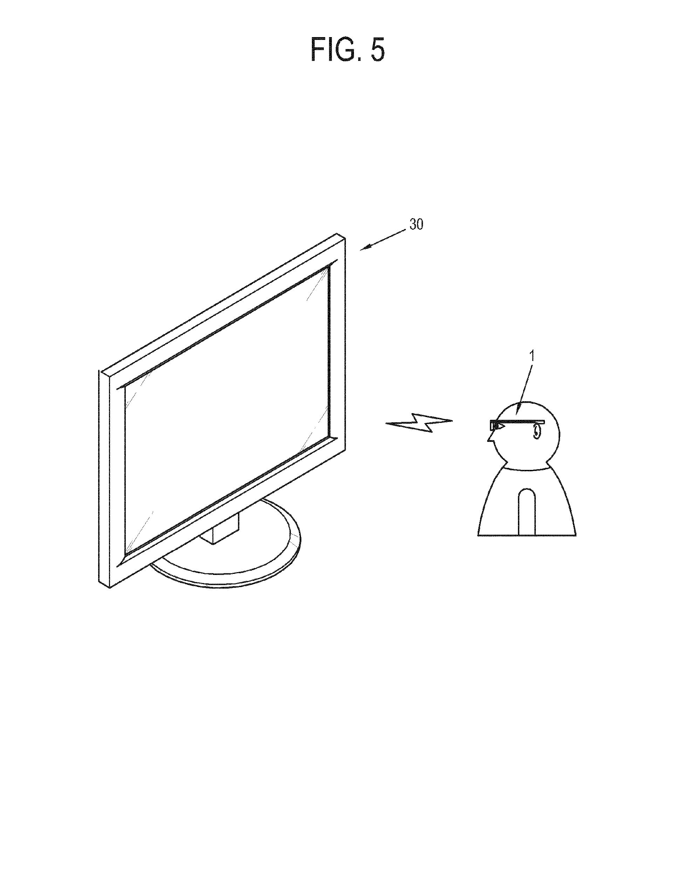

FIG. 5 illustrates a display apparatus 1 operating in synchronous mode, that is, operating in synchronization with an external display apparatus 30.

As illustrated in FIG. 5, the display apparatus 1 performs bidirectional communication with the external display apparatus 30, such as a TV, through the communication unit 150. When the display apparatus 1 and the external display apparatus 30 are paired with each other, various types of signals/data/information may be exchanged therebetween.

When the external display apparatus 30 displays a 3D image, the external display apparatus 30 alternately displays left-eye and right-eye images. The external display apparatus 30 generates a synchronization signal corresponding a display cycle of the left-eye and right-eye images and transmits the synchronization signal to the display apparatus 1.

When the synchronization signal is received, the display apparatus 1 controls the shutter operation of the shutter unit 140 based on the received synchronization signal. The display apparatus 1 may control the shutter unit 140 to transmit light for the left eye of the user and to block light for the right eye of the user while a left-eye image is displayed on the external display apparatus 30. The display apparatus 1 may control the shutter unit 140 to block light for the left eye of the user and to transmit light for the right eye of the user while a right-eye image is displayed on the external display apparatus 30. While the left-eye and right-eye images may be mixedly displayed on the external display apparatus 30, that is, the left-eye and right-eye images are scanned, the display apparatus 1 may control the shutter unit 140 to block light for both left and right eyes of the user.

The display apparatus 1 may control the display unit 130 not to display an image.

When the display apparatus 1 operates in synchronization with an external image displayed on the external display apparatus 30, the external image is not limited to a 3D image. According to an exemplary embodiment, the external image displayed on the external display apparatus 30 may be a multi-view image.

For example, the external display apparatus 30 may display a first external image and a second external image obtained by processing different image signals. The first and second external images may be displayed at a preset cycle. The left-eye and right-eye images of a 3D image may be displayed in a time-division manner.

When the display apparatus 1 allows external light to be transmitted only while the external display apparatus 30 displays the first external image, the user may perceive the first external image. When the display apparatus 1 allows external light to be transmitted only while the external display apparatus 30 displays the second external image, the user may perceive the second external image.

That is, when the display apparatus 1 worn by each of a plurality of users operates in accordance with a timing of any one of the first external image and the second external image, each user may watch a different external image through a single external display apparatus 30.

A display apparatus 1 according to an exemplary embodiment may operate in either mode among the synchronous mode in which the display apparatus 1 operates in accordance with a display cycle of external images displayed on the external display apparatus 30 and an image display mode in which the display apparatus 1 displays an image based on an image signal processed by the signal processing unit 120 on the display unit 130.

Selection of each mode may be realized by occurrence of a preset event, particularly by a control signal ordering to switch to a corresponding mode through the user input unit 160. The display apparatus 1 may automatically go to the synchronous mode when paired with the external display apparatus 30. The display apparatus 1 may automatically go to the image display mode or a standby mode when cancelling pairing with the external display apparatus 30.

The standby mode may be defined variously depending on a design and may be designated, for example, as allowing light transmission for both eyes of the user by the shutter unit 140 and not displaying an image on the display unit 130.

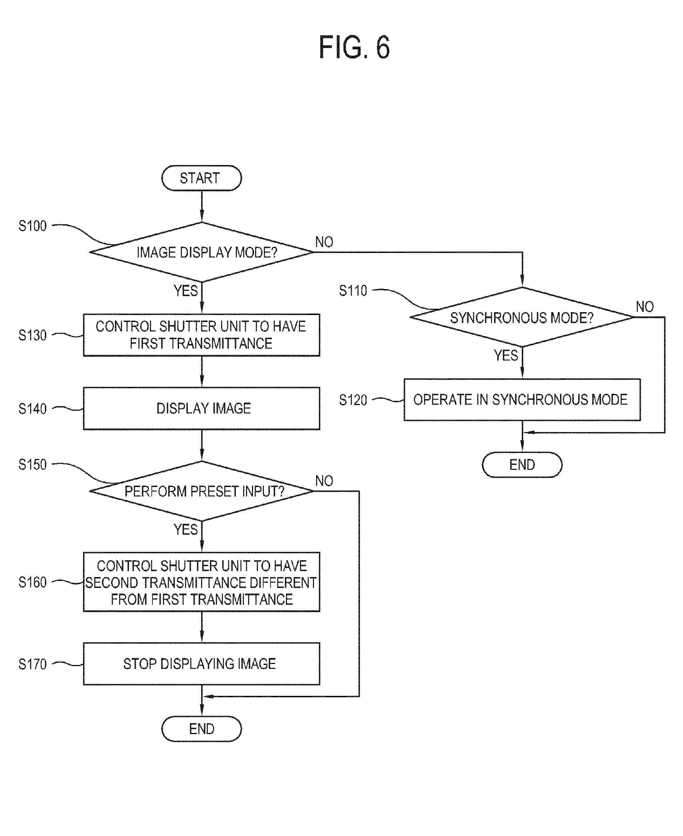

An exemplary operation process of the display apparatus 1 according to an exemplary embodiment is described with reference to FIG. 6.

FIG. 6 illustrates an exemplary control method of the display apparatus 1.

As illustrated in FIG. 6, the controller 190 operates in accordance with an instruction to enter the image display mode (S100) or an instruction to enter the synchronous mode (S110).

When the instruction to enter the synchronous mode is received (S110), the controller 190 controls the display apparatus 1 in the synchronous mode (S120). An exemplary synchronous mode has been described with reference to FIG. 5.

When the instruction to enter the image display mode is received (S100), the controller 190 may perform a control operation.

In order that the user easily recognizes an image displayed on the display unit 130 while the display apparatus 1 operates in the image display mode, interference by external light with the vision for both eyes of the user may be minimized.

The controller 190 may control the shutter unit 140 to block the external light or maintain transmission of the external light at a preset first transmittance in the image display mode (S130). That is, the controller 190 may reduce an interference level of the external light while the image is displayed on the display unit 130, so that the user may clearly perceive the image.

A first transmittance is not limited to a particular value but may be changed variously within a range in which an external light blocking rate is considered relatively high so that a general user easily perceive an image displayed on the display unit 130.

The controller 190 controls the signal processing unit 120 and the display unit 130 to display an image on the display unit 130 (S140).

A user may manipulate the user input unit 160 or attempt to see an external environment while the image is displayed. Since the shutter unit 140 maintains light transmitted at the first transmittance, it may be difficult for the user to see the external environment.

When a preset input is received from the user input unit 160 (S150), the controller 190 adjusts the first transmittance to a second transmittance different from the first transmittance (S160).

The second transmittance is not limited to a particular value but may be changed variously. In an exemplary embodiment, the second transmittance is set to be higher than the first transmittance. That is, when the user manipulates the user input unit 160 while an image is displayed, the controller 190 controls a light transmission state of external light through the shutter unit 140 to be relatively high.

The preset input from the user input unit 160 may have various forms. For example, when the user input unit 160 is an external device separated from the display apparatus 1, such as a remote controller or a mobile phone, the preset input may be a manipulation of a cursor key provided on the external device or a touch motion of a touch pad/touch screen installed on the external device.

When a touch sensor (not shown) is installed in a preset area of the display apparatus 1, the preset input may be made by the touch sensor detecting a touch by the user.

The controller 190 controls the shutter unit 140 to have a second transmittance, and to maintain an image displayed on the display unit 130 in a stationary state. The controller may control the shutter unit to not display an image on the display unit 130 (S170). Accordingly, the user wearing the display apparatus 1 may easily perceive the external environment.

When the display apparatus 1 includes an illumination sensor (not shown) detecting an amount of light in the external environment, the controller 190 may automatically adjust the transmittance of the shutter unit 140 based on a detection result by the illumination sensor. The controller 190 may increase or decrease the transmittance of the shutter unit 140 based on a detection result by the illumination sensor.

For example, when the amount of light detected by the illumination sensor is higher than a preset level, that is, when the external environment is relatively bright, the controller 190 reduces the transmittance of the shutter unit 140, thereby increasing an external light blocking level. When the amount of light detected by the illumination sensor is lower than a preset level, that is, when the external environment is relatively dark, the controller 190 increases the transmittance of the shutter unit 140, thereby decreasing the external light blocking level.

The controller 190 may adjust the transmittance of the shutter unit 140 using various methods, for example, a method of adjusting a level of driving voltage applied to the shutter unit 140 and a method of adjusting a duty width or "duty cycle" of driving voltage applied to the shutter unit 140.

In the method of adjusting the level of the driving voltage applied to the shutter unit 140, and the shutter unit 140 includes the liquid crystal shutter glass, transmittance of liquid crystals increases as higher voltage is applied to the liquid crystals. Thus, the transmittance of the shutter unit 140 may increase with a higher level of driving voltage, while the transmittance of the shutter unit 140 may decrease with a lower level of driving voltage.

In the method of adjusting the duty cycle of the driving voltage applied to the shutter unit 140, the duty cycle defines the time for which the liquid crystals are on, and a higher duty cycle (a longer width of the duty) may indicate the shutter unit 140 is open for longer. A longer open time of the shutter unit 140 may indicate a longer time for light to pass through the liquid crystals. Thus, the transmittance of the shutter unit 140 may increase with a longer duty width of driving voltage, while the transmittance of the shutter unit 140 may decrease with a shorter duty width of driving voltage.

Thus, the transmittance of the shutter unit 140 may be adjusted.

According to an exemplary embodiment, the display apparatus 1 operates in the image display mode or the synchronous mode. The display apparatus 1 may also operate only in the image display mode, and not in the synchronous mode.

That is, the display apparatus 1 controls the shutter unit 140 to maintain external light transmitted at the preset first transmittance while an image is displayed on the display unit 130, and controls the shutter unit 140 to transmit external light at the second transmittance higher than the first transmittance when a preset event, for example, an input through the user input unit 160, occurs while the shutter unit 140 maintains the external light transmitted at the first transmittance.

Although a few exemplary embodiments have been shown and described, it will be appreciated by those skilled in the art that changes may be made in these exemplary embodiments without departing from the invention, the scope of which is defined in the appended claims.

## Claims

1. A head-mounted display apparatus comprising:
a display unit;
a signal processing unit for processing an external image signal to display a first image on the display unit;
a shutter glass for performing a shutter operation to allow a selective transmission of external light;
a communication unit for communicating with an external display apparatus;
and
a controller for selectively controlling the head-mounted display apparatus to operate in one of a first mode, in which the head-mounted display apparatus operates corresponding to a second image displayed on the external display apparatus, and a second mode, in which the head-mounted display apparatus displays the image signal processed by the signal processing unit on the display unit as the first image, based on a preset event.

2. The head-mounted display apparatus of claim 1, wherein the controller controls the shutter operation of the shutter glass to correspond to a display cycle of the second image in the first mode and controls the shutter glass to maintain a transmission of external light at a preset first transmittance in the second mode.

3. The head-mounted display apparatus of claim 2, wherein the controller is operable to control the shutter glass to adjust transmission of the external light to a second transmittance different from the first transmittance in the second mode.

4. The head-mounted display apparatus of claim 3, further comprising a user input unit configured to command adjustment of transmittance of the shutter glass by the controller based on a user input.

5. The head-mounted display apparatus of claim 4, wherein the user input unit comprises an external device communicating with the communication unit via a wire or wirelessly.

6. The head-mounted display apparatus of claim 4, wherein the user input unit comprises a touch sensor installed in the head-mounted display apparatus.

7. The head-mounted display apparatus of claim 3, further comprising an illumination sensor, wherein the controller adjusts transmittance of the shutter glass based on a detection result by the illumination sensor.

8. The head-mounted display apparatus of any one of the claims 3 to 7, wherein the controller controls the first image on the display unit to stay still while transmittance of the shutter glass is adjusted.

9. The head-mounted display apparatus according to any one of claims 3 to 7 wherein the controller controls the display not to display the first image while transmittance of the shutter glass is adjusted.

10. The head-mounted display apparatus of any one of the preceding claims, further comprising a user input unit, wherein the preset event is generated by a user input through a user input unit.

11. The head-mounted display apparatus of any one of claims 1 to 9, wherein the preset event is generated by performing or cancelling pairing with the external display apparatus through the communication unit.

12. The head-mounted display apparatus of any one of the preceding claims, wherein the controller controls the shutter operation in accordance with when the second image displayed on the external display apparatus is a three-dimensional (3D) image or a multi-view image in the first mode.

13. The head-mounted display apparatus of any one of the preceding claims, wherein the communication unit receives a synchronization signal corresponding a display cycle of the second image from the external display apparatus in the first mode, and the controller controls the shutter operation based on the synchronization signal.

14. A control method of a head-mounted display apparatus comprising a display unit and a shutter glass performing a shutter operation to allow selective transmission of external light, the control method comprising:
receiving a control signal based on a preset event; and
controlling the head-mounted display apparatus to selectively operate in one of a first mode, in which the head-mounted display apparatus operates corresponding to an external image displayed on the external display apparatus, and a second mode, in which the head-mounted display apparatus displays an image on the display unit, based on the control signal.

15. The control method of claim 13, wherein selectively controlling the head-mounted display apparatus to operate in one of the first mode and the second mode comprises controlling the shutter operation of the shutter glass to correspond to a display cycle of the external image in the first mode and controlling the shutter glass to maintain transmission of external light at a preset first transmittance in the second mode.
